# EUROPÄISCHE PATENTSCHRIFT

(11) **EP 1 687 668 B1**
(45) Veröffentlichungstag und Bekanntmachung des Hinweises auf die Patenterteilung: **01.08.2007**
(21) Anmeldenummer: 04765725.9
(22) Anmeldetag: 30.09.2004
(51) Int. Cl.: G02F 1/03

(54) **ELEKTROOPTISCHES ELEMENT**
ELECTROOPTICAL ELEMENT
ELEMENT ELECTRO-OPTIQUE

(30) Priorität: 25.11.2003 DE 20318348 U
(43) Veröffentlichungstag der Anmeldung: 09.08.2006
(73) Patentinhaber: LINOS Photonics GmbH & Co. KG, 37081 Göttingen (DE)
(72) Erfinder: FEHN, Thomas, 96317 Kronach (DE); BALLE, Stefan, 82110 Germering (DE); POGGEL, Sven, 82216 Maisach (DE)
(74) Vertreter: Säger, Manfred
(86) Internationale Anmeldenummer: PCT/EP2004/010949
(87) Internationale Veröffentlichungsnummer: WO 2005/059634

(56) Entgegenhaltungen:
- DD-A3- 254 867
- US-A- 4 229 079
- US-A- 5 221 988
- PATENT ABSTRACTS OF JAPAN Bd. 008, Nr. 165 (P-291), 31. Juli 1984 (1984-07-31) & JP 59 061817 A (NIPPON DENKI KK), 9. April 1984 (1984-04-09)
- KUZOVKOVA T A ET AL: "Laser electrooptic Q-switch with stable contrast" INSTRUMENTS AND EXPERIMENTAL TECHNIQUES USA, Bd. 35, Nr. 1, 1. Februar 1992 (1992-02-01), Seiten 122-124, XP009043093 ISSN: 0020-4412

## Beschreibung

Die Erfindung betrifft ein gattungsgemässes elektrooptisches Element gemäss dem Oberbegriff des Hauptanspruchs zwecks Einbau in einen elektrooptischen Modulator (EOM) z.B. Pockelszelle, mit einem Gehäuse, mit dem darin angeordenten Kristall als senkrechter Zylinder, z.B. Kreiszylinder oder Quader, dessen beide Deckflächen eine Frontebene für den Eintritt eines Lichtstrahls und eine mit Abstand dazu angeordneten Austrittsebene bilden und an denen je eine Ringelektrode anliegt, und mit einer zwischen dem Gehäuse einerseits und sowohl dem Mantelbereich des Kristalls als auch den beiden Ringelektroden andererseits vorgesehenen Halterung.

Solche Elemente sind bekannt. Nachdem alle Kristalle der elektrooptischen. Elemente piezoelektrische Wirkungen aufweisen, zeigen bei periodischen Änderungen des angelegten elektrischen Feldes die Elemente mechanische Dehnungen, also Eigenschwingungen bei Eigenfrequenzen -sogenannte Piezoresonanzen- , welche eine zusätzliche Änderung der optischen Dichte bewirken und bei der Übertragung des elektrischen Ansteuersignals der Phase des Lichtstrahls überlagert sind, was in hohem Masse unerwünscht ist.

Der Erfindung liegt die Aufgabe zugrunde, diese Eigenschwingungen zu reduzieren.

Diese Aufgabe wird bei einem gattungsgemässen elektrooptischen Element gemäss dem Oberbegriff des Hauptanspruchs erfindungsgemäss durch dessen kennzeichnende Merkmale namlich dadurch gelöst, dass die Halterung aus einem sich konzentrisch um jede Ringelektrode erstreckenden, zwischen sich und dem Gehäuse einen abgeschlossenen Ringraum bildenden O-Ring aus einem elektrisch leitfähigen Werkstoff und einer den Ringraum ausfüllenden erhärteten Vergussmasse besteht.

Durch die Vergussmasse werden in überraschend einfacher Weise mit Vorteil die Eigenschwingungen und ggf. die resonanten Überhöhungen reduziert, was nach nicht gesicherter Erkenntnis darauf zurückzuführen sein könnte, dass die Vergussmasse als Schallabsorber wirkt.

Wenn in zweckmässiger Ausgestaltung die Vergussmasse und die Form des Ringraums so ausgewählt sind, dass die Schallkennimpedanz an das elektrooptische Element angepasst ist, so ergibt sich als zusätzlicher Vorteil eine maximale Reduktion der Eigenschwingungen.

Weitere zweckmässige Ausgestaltungen und Weiterbildungen der Erfindung sind in den Unteransprüchen gekennzeichnet.

Ein Ausführungsbespiel der Erfindung wird nachfolgend unter Bezugnahme auf die Zeichnung näher erläutert. In dieser zeigt:
- Figur 1: ein elektrooptisches Element, im schematischen Querschnitt, und
- Figur 2: eine Schnitt II-II gemäss Figur 1.

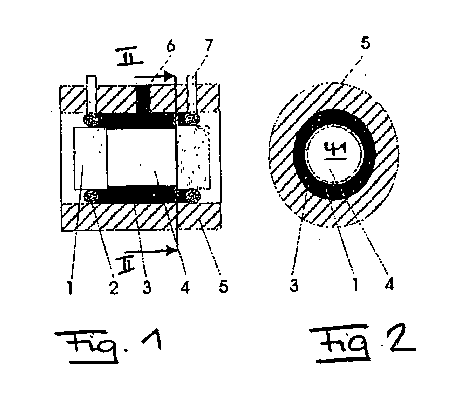

Das elektrooptische Element gemäss Figur 1 weist ein Gehäuse 5 mit einem darin angeordneten Kristall 4 in Form eines senkrechten Kreiszylinders, auf und ist für den Einsatz bei einem transversalen EOM, z.B. eine Pockelszelle, gedacht. Dessen beide Deckflächen dienen als Frontebene für den Eintritt eines eintretenden Lichtstrahls und als eine parallel sowie mit Abstand dazu angeordnete Austrittsebene 41 für den Lichtstrahl. An den Deckflächen liegt eine Ringelektrode 1 an.

Zwischen dem Gehäuse 5 einerseits und sowohl dem Mantelbereich des Kristalls 4 als auch den beiden Ringelektroden 1, die mit einem Anschlusskontakt 7 versehen sind, andererseits ist für diese Teile (1,4) eine Halterung vorgesehen.

Diese Halterung weist einen sich konzentrisch um jede Ringelektrode 1 erstreckenden, zwischen sich und dem Gehäuse einen abgeschlossenen Ringraum bildenden O-Ring 2 aus einem elektrisch leitfähigen Werkstoff auf. Das Gehäuse 5 ist ferner in seinem Mantel mit einer Einfüllöffnung 6 versehen, über die eine Vergussmasse aus einem Kunststoff in den Ringraum eingefüllt wird, so dass dieser den Ringraum vollständig ausfüllt und danach erhärtet. Hierdurch werden der Kristall 4 und teilweise die beiden Ringelektroden 1, soweit diese nicht schon von dem O-Ring gehalten sind in dem Gehäuse 5 fixiert.

Durch Wahl der Form des Ringraumes und des Kunststoffes können Eigenschwingungen des Kristalls wirksam gedämpft werden. Als Kunststoffe für die Vergussmasse kommen Harze, Epoxide, Lacke, Wachse, Thermoplaste, Elastomere, Duromere, und/oder Acrylate in Betracht.

## Patentansprüche

1. Elektrooptisches Element für einen elektrooptischen Modulator (EOM), z.B. Pockelszelle, mit einem Gehäuse (5), mit einem darin angeordenten Kristall (4) in Form eines Zylinders, dessen beide Senkrecht zu seiner Mantelfläche stehenden Deckflächen eine Frontebene für den Eintritt eines Lichtstrahls und eine mit Abstand dazu angeordnete Austrittsebene (41) bilden und an denen je eine Ringelektrode (1) anliegt , mit in dem Gehäuse (5) vorgesehenen Anschlußkontakten (7) für die Ringelektroden (1) und mit einer zwischen dem Gehäuse einerseits und sowohl dem Mantelbereich des Kristalls als auch den beiden Ringelektroden andererseits vorgesehenen Halterung,
**dadurch gekennzeichnet, dass** die Halterung aus je einem sich konzentrisch um jede Ringelektrode (1) erstreckenden O-Ring (2) aus einem elektrisch leitfähigen Werkstoff und einem abgeschlossenen Ringraum, definiert durch besagte O-Ringe (2), das Gehäuse (5) und den Kristall (4), gebildet wird, wobei der Ringraum durch eine erhärtete Verguβmasse ausgefüllt ist, und jeder der besagten O-Ringe (2) jeweils in elektrischem Kontakt steht mit der zugehörigen Ringelektrode (1) uns dem entsprechenden Anschlußkontakt (7).

2. Element nach Anspruch 1, **dadurch gekennzeichnet, dass** das Gehäuse (5) eine Einfüllöffnung (6) für die Vergussmasse (3) in seinem Mantel aufweist.

3. Element nach Anspruch 1 oder 2, **dadurch gekennzeichnet, dass** die Vergussmasse (3) aus einem Kunststoff besteht.

4. Element nach Anspruch 3, **dadurch gekennzeichnet, dass** der Kunststoff für die Vergussmasse (3) aus Harzen, Epoxiden, Lacken, Wachsen, Thermoplasten, Elastomeren, Duromeren, und/oder Acrylaten besteht.

## Claims

1. Electrooptic element for an electrooptic modulator (EOM), for example, a Pockel's cell, comprising a housing (5), with a crystal (4) in the form of a cylinder arranged therein, of which the two end surfaces disposed perpendicular to its circumferential surface form a front plane for the entry of a light beam and an emergence plane (41) disposed at a distance from the latter, each of which is in contact with an annular electrode (1), with connecting contacts (7) provided in the housing (5) for the annular electrodes (1), and with a mounting provided between the housing, on the one hand, and both the circumferential surface of the crystal and also the two annular electrodes, on the other hand,
**characterised in that**
the mounting is formed in each case by an O-ring (2) extending in a concentric manner around each annular electrode (1) and consisting of an electrically-conductive material and an enclosed annular space, defined by the said O-ring (2), the housing (5) and the crystal (4), wherein the annular space is filled with a hardened casting compound, and each of the said O-rings (2) is disposed respectively in electrical contact with the associated annular electrode (1) and the corresponding connecting contact (7).

2. Element according to claim 1,
**characterised in that**
the housing (5) provides in its casing an aperture (6) for filling the casting compound (3).

3. Element according to claim 1 or 2,
**characterised in that**
the casting compound (3) consists of a synthetic material.

4. Element according to claim 3,
**characterised in that**
the synthetic material for the casting compound (3) consists of resins, epoxides, varnishes, waxes, thermoplastics, elastomers, duromers and/or acrylates.

## Revendications

1. Elément électro-optique destiné à un modulateur électro-optique (EOM), par exemple une cellule de Pockel, comportant un boîtier (5), un cristal (4) disposé à l'intérieur de celui-ci sous la forme d'un cylindre, dont les deux surfaces de recouvrement, perpendiculaires à sa surface de gaine, forment un plan avant pour l'entrée d'un faisceau lumineux et un plan de sortie (41) disposé à une certaine distance de celui-ci et, sur chacune d'entre elles, repose respectivement une électrode annulaire (1), comportant des contacts de connexion (7) prévus dans le boîtier (5) pour les électrodes annulaires (1), et un élément de maintien prévu entre le boîtier d'une part et aussi bien la zone de gaine du cristal que les deux électrodes annulaires d'autre part, **caractérisé en ce que** l'élément de maintien est formé par un joint torique (2) s'étendant concentriquement autour de chaque électrode annulaire (1), constitué d'un matériau électroconducteur et d'un espace annulaire fermé, défini par lesdits joints toriques (2), le boîtier (5) et le cristal (4), moyennant quoi l'espace annulaire est rempli par une masse de scellement durcie, et chacun desdits joints toriques (2) est respectivement en contact électrique avec l'électrode annulaire (1) associée et le contact de connexion (7) correspondant.

2. Elément selon la revendication 1, **caractérisé en ce que** le boîtier (5) présente un orifice de remplissage (6) destiné à la masse de scellement (3) dans sa gaine.

3. Elément selon la revendication 1 ou 2, **caractérisé en ce que** la masse de scellement (3) est constituée de matière plastique.

4. Elément selon la revendication 3, **caractérisé en ce que** la matière plastique destinée à la masse de scellement (3) est constituée de résines, époxydes, laques, cires, thermoplastiques, élastomères, duromères et/ou acrylates.
